# EUROPÄISCHE PATENTANMELDUNG

(11) **EP 1 347 192 A2**
(43) Veröffentlichungstag der Anmeldung: **24.09.2003**
(21) Anmeldenummer: 03004421.8
(22) Anmeldetag: 27.02.2003
(51) Int. Cl.: F16D 3/56, F16D 3/78

(54) **Drehsteife aber radial nachgiebige Kupplung**

(30) Priorität: 15.03.2002 DE 10211484
(71) Anmelder: Centa-Antriebe Kirschey GmbH, 42781 Haan (DE)
(72) Erfinder: Kirschey, Gerhard, 42329 Wuppertal (DE)
(74) Vertreter: Ostriga, Sonnet, Wirths & Roche

(57) **Zusammenfassung**

Dargestellt und beschrieben ist eine insbesondere drehsteife Wellenkupplung, mit einem Flansch zum Anschluss an ein erstes Maschinenteil wie Schwungrad und einer Nabe zur Kupplung mit einem zweiten Maschinenteil wie Welle sowie mit Zwischengliedern zur Kraftübertragung. Entsprechend der Erfindung bilden der Flansch, die Nabe und die Zwischenglieder, werkstoffeinheitlich-stoffschlüssig miteinander verbunden, ein einstückiges Kunststoffteil aus und die Zwischenglieder sind nach Art an sich bekannter Parallellenker zweier einander kreuzender Parallellenkergetriebe ausgeführt. Hierdurch wird eine sehr einfache und in Axialrichtung schmal bauende, radial-elastische Kupplung geschaffen.

## Beschreibung

Die Erfindung bezieht sich auf eine Kupplung, insbesondere drehsteife Wellenkupplung, mit einem Flansch zum Anschluss an ein erstes Maschinenteil wie Schwungrad und einer Nabe zur Kupplung mit einem zweiten Maschinenteil wie Welle sowie mit Zwischengliedern zur Kraftübertragung, nach dem Oberbegriff des Anspruchs 1.

Eine derartige Kupplung, vornehmlich zur Verbindung von Hydraulikpumpen und anderen Aggregaten mit geringer Trägheitsmasse und Getrieben bestimmt, ist durch offenkundige Vorbenutzung seitens der Anmelderin unter der Typenbezeichnung *CENTAFLEX® Baureihe K* bekannt. Kupplungen dieser bekannten Bauart sind einfach, robust und preiswert, im übrigen sehr drehsteif, fast drehstarr, und zeichnen sich u.a. durch eine in Axialrichtung platzsparende Bauweise aus. Die Kupplungsnabe besteht aus Metall, an der radial nach außen weisende Mitnehmernocken in regelmäßigen Umfangsabständen angeschraubt sind. Diese Nocken greifen in angepasste taschenartige Aufnahmen der anderen Kupplungshälfte ein, die aus einer Kunststoffscheibe besteht, welche nahe ihres umlaufenden Außenrandes Bohrungen zum Anschrauben an das Schwungrad einer Maschine, insbesondere einer Pumpe, aufweist. Die Nocken und Taschen bilden die Zwischenglieder nach dem Oberbegriff des Anspruchs 1 aus.

Ziel der vorliegenden Erfindung ist es, eine derartige Kupplung mit zusätzlichen radialelastischen Eigenschaften auszugestalten unter Beibehaltung oder gar Verringerung des baulichen Aufwandes.

Die Erfindung löst die Aufgabe mit den Merkmalen des Anspruches 1 und ist dem entsprechend dadurch gekennzeichnet, dass der Flansch, die Nabe und die Zwischenglieder, werkstoffeinheitlich-stoffschlüssig miteinander verbunden, ein einstückiges Kunststoffteil ausbilden und dass die Zwischenglieder nach Art an sich bekannter Parallellenker einander kreuzender Parallellenkergetriebe ausgeführt sind.

In weiterer Ausgestaltung ist vorgesehen, dass der Flansch, die Nabe und die Parallellenker im Wesentlichen in einer Ebene der insgesamt im Wesentlichen scheibenförmigen Kupplung angeordnet sind.

Die Parallellenker können Flansch und Nabe als einarmige Hebel miteinander verbinden, während entsprechend einer Alternativlösung die Parallellenker als zweiarmige, jeweils eine Biegefeder ausbildende Hebel angeordnet sind.

Kupplungen mit zwei einander kreuzenden Parallellenkergetrieben mit jeweils zwei Parallellenkern sind in der Literatur in zahlreichen Ausführungen bekannt. Beispielhaft wird hierzu verwiesen auf DE 195 43 130 A1. Hier sind die beiden Parallellenkergetriebe Bestandteil eines Zwischengliedes, dem in Axialrichtung der Kupplung eine erste Kupplungshälfte vorgelagert und eine zweite Kupplungshälfte nachgelagert ist. Jeder der vier Lenker der beiden Parallellenkergetriebe ist an einem Ende an einem ringförmigen Zentralkörper des Zwischengliedes angeformt. Am jeweiligen, von dem Kupplungszwischenglied wegzeigenden Ende weist jeder Lenker ein Auge zur Aufnahme eines Zapfens auf, der das Zwischenglied mit der ersten bzw. der zweiten Kupplungshälfte verbindet. Die Lenker sind jeweils paarweise parallel zueinander angeordnet und sind jeweils Bestandteil eines Parallellenkergetriebes, und die beiden Parallellenkergetriebe kreuzen einander. Auf diese Weise bewirken die beiden Parallellenkergetriebe eine Parallelführung des Kupplungszwischengliedes an der einen Kupplungshälfte und senkrecht dazu eine Parallelführung an der anderen Kupplungshälfte. Beim einem Achsversatz zwischen antreibender Kupplungshälfte und angetriebener Kupplungshälfte erfolgt dann eine periodische Durchbiegung der Lenker, so dass die Kupplung radialelastische Eigenschaften aufweist..

Von diesem Stand der Technik unterscheidet sich die vorliegende Erfindung im Wesentlichen dadurch, dass die beiden Parallellenkergetriebe mit ihren Parallellenkern vollständig, d.h. praktisch ohne axialen Raumbedarf in das Innere der im Wesentlichen scheibenförmige Kupplung integriert sind. Die Parallellenkergetriebe sind auch nicht Bestandteile eines besonderen bzw. gesonderten Zwischengliedes, sondern sowohl mit der Nabe einerseits als auch mit der im Kupplungsflansch andererseits einstückig-stoffschlüssig verbunden sind. Es entfallen die Augen der Parallellenker ebenso wie die mechanischen Kupplungsmittel z.B. in Form von Bolzen, Schrauben od.dgl. zur Verbindung mit den beiden Kupplungshälften.

Die erfindungsgemäße Kupplung kann insgesamt als einstückiges Bauteil aus Kunststoff, insbesondere aus thermoplastischem Spritzgießwerkstoff, hergestellt sein, wodurch sich eine extrem kostengünstige Kupplung schaffen lässt.

Entsprechend besonderer Ausgestaltung weist die Kupplung einen mittels Durchbrechungen skelettierten Aufbau auf, wobei die Verbindungsstellen zwischen den nabenseitigen Parallellenkern und dem Zentralkörper mit den Verbindungsstellen zwischen den anderen Parallelenkern und dem Zentralkörper kraftflussmäßig auf kürzestem Wege, vorzugsweise mittels Schrägstegen, miteinander verbunden sind.

Weitere vorteilhafte und zweckmäßige Weiterbildungen des Gegenstandes der Erfindung sind in den bislang nicht zitierten abhängigen Ansprüchen enthalten und ergeben sich im übrigen auch aus der folgenden Beschreibung.

Im übrigen versteht sich die Erfindung am besten anhand der nachfolgenden Beschreibung einiger Ausführungsbeispiele unter Bezugnahme auf die beigefügten Zeichnungen. Darin zeigen:
- Fig. 1: eine Kupplung in schematischen Ansicht gemäß einem ersten Ausführungsbeispiel,
- Fig. 2: eine entsprechende Darstellung einer zweiten Ausführungsform,
- Fig. 3: eine gegenüber Fig. 1 und Fig. 2 vergrößerte Darstellung einer dritten Ausführungsform und
- Fig. 4: eine schaubildliche Ansicht einer nach dem Prinzip der Fig. 3 ausgeführten Kupplung.

Eine Kupplung ist in ihrer Gesamtheit mit der Bezugsziffer 10 bezeichnet. Sie besteht aus einem einstückigen Kunststoff-Körper, der insbesondere im Spritzgießverfahren aus hochwertigem thermoplastischem Kunststoff erzeugt ist. Ein besonders geeignetes Kunststoffmaterial ist GFK.

Die Kupplung 10 ist untergliedert sich in einen Flansch 11, eine Nabe 12 sowie Zwischenglieder, die in ihrer Gesamtheit mit 13 bezeichnet sind. Dabei besteht eine Besonderheit darin, dass diese Teile 11, 12 und 13, quasi ineinander geschachtelt, im Wesentlichen in gleicher Ebene angeordnet sind.

Die Nabe 12 weist eine zentrale, in sich geschlossene Bohrung 14 auf zum Anschluss an eine nicht dargestellte Welle. In diese Bohrung 14 kann eine Stahlhülse eingepresst oder eingegossen sein bzw. werden, die z.B. eine axiale Innenverzahnung aufweist, welche mit einer entsprechenden axialen Außenverzahnung der Welle korrespondiert. In den Zeichnungen ist nicht dies dargestellt.

Der Flansch 11 bildet einen äußeren Ring der Kupplung 10 aus und weist Bohrungen 15 zum insbesondere Schraub-Anschluss an ein nicht dargestelltes Schwungrad eines Dieselmotors oder an eine Pumpe auf.

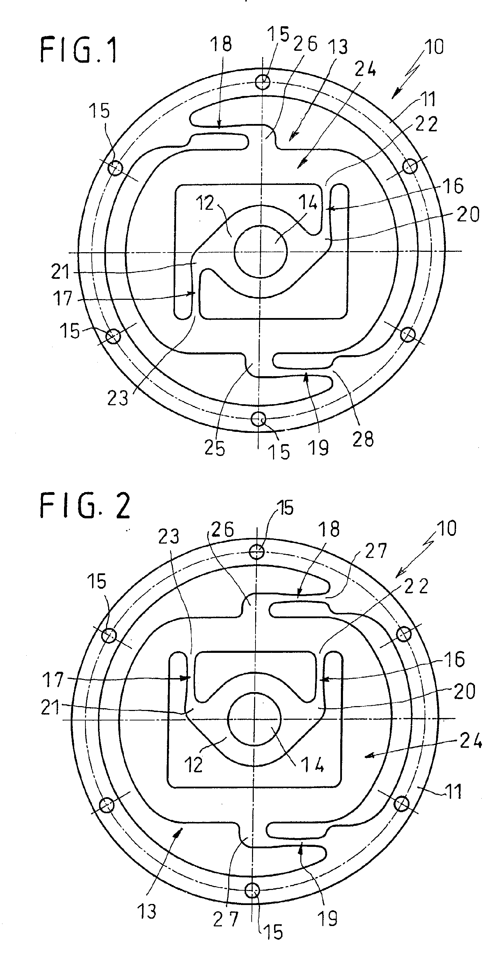

Zunächst entsprechend Fig. 1 umfassen die Zwischenglieder 13, also diejenigen Kunststoffteile, welche die Nabe 12 und den Flansch 11 miteinander verbinden, zwei zueinander parallele erste Parallellenker 16 und 17 und zwei zueinander parallele zweite Parallellenker 18 und 19. Die ersten Lenker 16 und 17 sind mit ihrem einen Ende an jeweils einer Verbindungsstelle 20 und 21 mit der Nabe 12 verbunden und mit ihrem jeweiligen anderen Ende bei 22 und 23 an einen im weitesten Sinne ringförmigen Zentralkörper 24 angeformt. Die Parallellenker 18 und 19 sind mit ihren inneren Enden bei 25 und 26 an den Zentralkörper 24 angeformt und mit ihren nach außen weisenden Enden an Verbindungsstellen 27 und 28 mit dem Flansch 11 verbunden. Alle genannten Verbindungsstellen stellen werkstoffeinheitlich-stoffschlüssige Übergänge zwischen Bauteilen oder Abschnitten der einteiligen Kupplung dar.

Betrachtet man nun Fig. 1, wird deutlich, dass die Parallellenker 16 und 17 ein erstes Parallellenkergetriebe bilden, wobei Bewegungen der Nabe 12 bezüglich Fig. 1 vertikal nach oben und unten im Wesentlichen starr vom Zentralkörper 24 abgefangen werden, wohingegen eine von dieser Richtung abweichende Bewegung mit Komponente nach rechts oder links eine elastische Verlagerung der Nabe 12 relativ zum Zentralkörper 24 ermöglicht. Deutlich wird ferner, dass die beiden anderen Parallellenker 18 und 19 des zweiten Parallellenkergetriebes eine Relativbewegung des Zentralkörpers 24 nach rechts oder links starr unterbinden, wohingegen eine Relativbewegung in einer davon abweichenden Richtung mit Komponente nach oben oder unten die Elastizität der Parallellenker 18 und 19 relativ zum Flansch 11 nutzbar macht. Die beiden Parallellenkergetriebe, die einerseits durch die Parallellenker 16 und 17 und andererseits durch die Parallellenker 18 und 19 repräsentiert sind, stehen senkrecht aufeinander, so dass die Kupplung insgesamt in allen Radialrichtungen eine elastische Verlagerung der Nabe 12 relativ zum Kupplungsring 11 erlaubt.

Die Kupplung nach Fig. 2 unterscheidet sich von der nach Fig. 1 lediglich durch abweichende Umfangsausrichtung jeweils eines Parallellenkers der beiden Parallellenkergetriebe. Während sich bezüglich Fig. 1 (jeweils ausgehend vom Innern der Kupplung) der Parallellenker 16 nach oben und der Parallellenker 17 nach unten, der Parallellenker 18 nach links und der Parallellenker 19 nach rechts erstrecken, verlaufen die beiden Parallellenker 16 und 17 in Fig. 2 von der Nabe 12 ausgehend nach oben und die Parallellenker 18 und 19, ausgehend vom Zentralkörper 24, beide nach rechts. Die prinzipielle Wirkungsweise der Kupplung ist jedoch dieselbe wie der Kupplung nach Fig. 1.

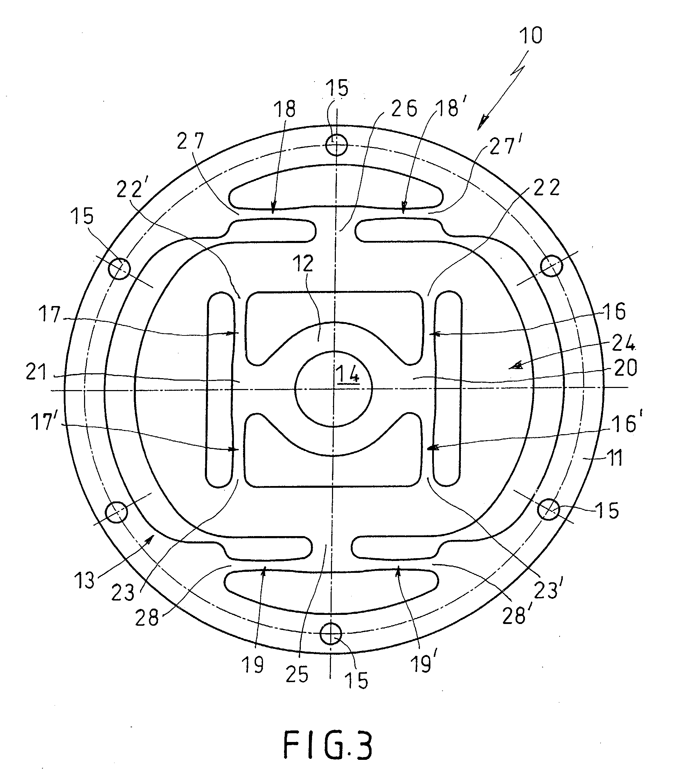

Bei der Kupplung nach Fig. 3 ist jeder der jeweils beiden Parallellenker des ersten Parallellenkergetriebes und des zweiten Parallellenkergetriebes doppelt vorhanden. Gewissermaßen liegen die Konfigurationen der Fig. 1 und 2 gleichzeitig vor. Konkret ist die Anordnung hier so getroffen, dass an den Verbindungsstellen 20 und 21 jeweils zwei voneinander wegstrebende Lenker 16 und 16' sowie 17 und 17' angeformt sind, so dass sich insgesamt vier Verbindungsstellen 22, 22' und 23, 23' ergeben, an denen die Parallellenker 16, 16', 17, 17' in den Zentralkörper 24 übergehen. Im Prinzip bilden die Parallellenker 16 und 16' eine an den Enden 22 und 23' eingespannte Blattfeder, die über die Verbindungsstelle 20 zentral belastet wird. Das gleiche gilt für die beiden bei 22' und 23 angebundenen Parallellenker 17 und 17', die ebenfalls eine Biegefeder bilden und bei 21 ihre Krafteinleitung erfahren.

Ganz ähnlich ist die Konfiguration beim zweiten Parallellenkergetriebe, dessen Parallellenker 18 und 18' bei 27 und 27' und die Lenker 19 und 19' bei 28 und 28' in den Flansch 11 münden und bei 25 und 26 in den Zentralkörper 24 übergehen. Auch hier bilden die Parallellenker 18 und 18' einerseits sowie 19 und 19' andererseits jeweils eine zentral belastete, an den Enden eingespannte Blattfeder aus.

Diese Ausführung nach Fig. 3 wird insbesondere wegen ihres vollsymmetrischen Aufbaus den anderen beiden Ausführungen nach Fig. 1 und 2 vorgezogen, wenngleich auch diese ihre Aufgabe zweckgerichtet lösen.

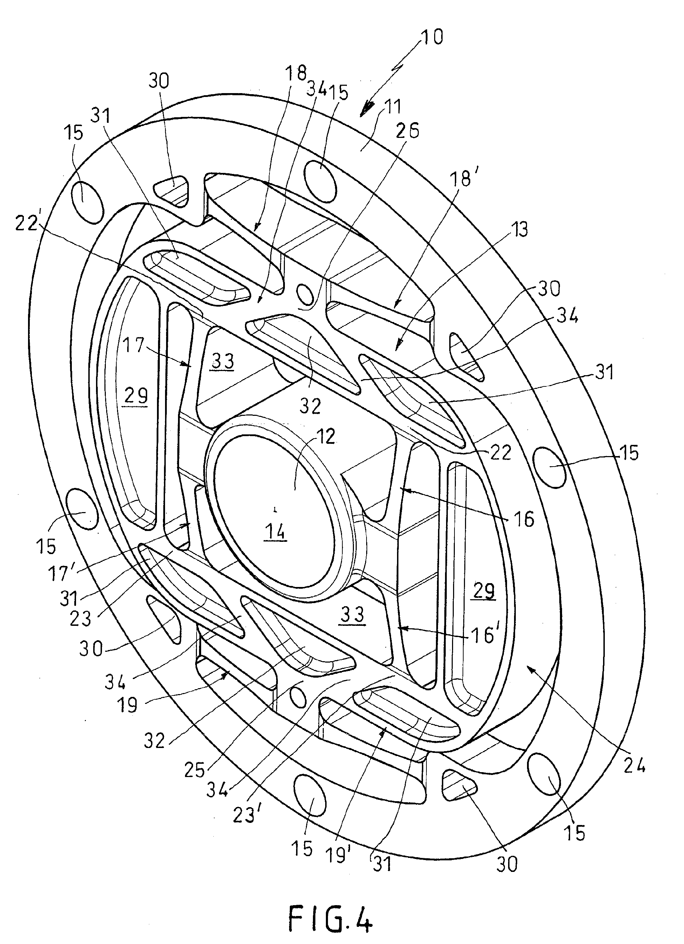

Fig. 4 schließlich zeigt eine nach dem Prinzip der Fig. 3 ausgeführte Kupplung. Auffallend ist hier u.a. der deutlichst skelettierte Aufbau, der durch zahlreiche materialsparende und gewichtsentlastende Aussparungen 29 bis 33 erreicht wird. Das führt insbesondere auch dazu, dass der Zentralkörper 24 im Wesentlichen nur aus Stegen bzw. Stegabschnitten besteht.

Bei der Betrachtung der Fig. 4 sei noch auf die Besonderheit hingewiesen, dass zwischen den Verbindungsstellen 22 und 22' der Lenker 16 und 17 mit dem Zentralkörper 24 und der Verbindungsstelle 26 zwischen dem Zentralkörper 24 und den flanschseitigen Lenkern 18 und 18' Schrägstege 34 ausgebildet sind, die die Verbindungsstellen 22 und 26 sowie 22' und 26' kraftflussmäßig auf kürzestem Wege miteinander verbinden. Das gleiche gilt auf der der Nabe 14 gegenüberliegenden Seite. Auch hier sind entsprechend Schrägstege 34 zwischen den Verbindungsstellen 23' und 25 sowie 23 und 25 angeordnet.

## Patentansprüche

1. Kupplung (10), insbesondere drehsteife Wellenkupplung, mit einem Flansch (11) zum Anschluss an ein erstes Maschinenteil wie Schwungrad und einer Nabe (12) zur Kupplung mit einem zweiten Maschinenteil wie Welle sowie mit Zwischengliedern (13) zur Kraftübertragung, **dadurch gekennzeichnet, dass** der Flansch (11), die Nabe (12) und die Zwischenglieder (13), werkstoffeinheitlich-stoffschlüssig miteinander verbunden, ein einstückiges Kunststoffteil ausbilden und dass die Zwischenglieder (13) nach Art an sich bekannter Parallellenker (16 bzw. 16', 17 bzw. 17', 18 bzw. 18', 19 bzw. 19') einander kreuzender Parallellenkergetriebe ausgeführt sind.

2. Kupplung nach Anspruch 1, **dadurch gekennzeichnet, dass** der Flansch (11), die Nabe (12) und die Parallellenker (16 bzw. 16', 17 bzw. 17', 18 bzw. 18', 19 bzw. 19') im Wesentlichen in einer Ebene der insgesamt im Wesentlichen scheibenförmigen Kupplung (10) angeordnet sind.

3. Kupplung nach Anspruch 1 oder 2, **dadurch gekennzeichnet, dass** die Parallellenker (16,17,18,19) Flansch (11) und Nabe (12) als einarmige Hebel miteinander verbinden.

4. Kupplung nach Anspruch 1 oder 2, **dadurch gekennzeichnet, dass** die Parallellenker (16 mit 16', 17 mit 17', 18 mit 18', 19 mit 19') als zweiarmige, jeweils eine Biegefeder ausbildende Hebel angeordnet sind.

5. Kupplung nach einem der vorhergehenden Ansprüche, **dadurch gekennzeichnet, dass** die Kupplung (10) einen mittels Durchbrechungen (29 bis 33) skelettierten Aufbau aufweist.

6. Kupplung nach Anspruch 5, **dadurch gekennzeichnet, dass** die Verbindungsstellen (22 bzw. 22'; 23 bzw. 23') zwischen den nabenseitigen Parallellenkern (16 bzw. 16'; 17 bzw. 17') und dem Zentralkörper (24) mit den Verbindungsstellen (25, 26) zwischen den anderen Parallelenkern und dem Zentralkörper (24) kraftflussmäßig auf kürzestem Wege miteinander verbunden sind.

7. Kupplung nach Anspruch 6, **dadurch gekennzeichnet, dass** die kraftflussmäßig kürzeste Verbindung von Schrägstegen (34) zwischen den nabenseitigen Parallellenkern (16 bzw. 16'; 17 bzw. 17') und den Verbindungsstellen (25, 26) zwischen den anderen Parallellenkern und dem Zentralkörper (24) ausgebildet ist.
